# EUROPEAN PATENT APPLICATION

(11) **EP 4 836 200 A1**
(43) Date of publication of application: **04.11.2026**
(21) Application number: 24913666.4
(22) Date of filing: 27.12.2024
(51) Int. Cl.: H01R 13/52, H01R 13/646

(54) **PROTECTIVE COVER FOR CONNECTOR OF BATTERY SYSTEM ASSEMBLY**

(30) Priority: 29.12.2023 KR 20230197246
(71) Applicant: Valeo Kapec Co., Ltd., Daegu 42709 (KR)
(72) Inventor: NAM, Kyungwook, Daegu 42709 (KR); KIM, Jungjin, Daegu 42709 (KR); YEO, Hyungdong, Daegu 42709 (KR); PARK, Ho-uk, Daegu 42709 (KR)
(74) Representative: Isarpatent
(86) International application number: PCT/KR2024/021260
(87) International publication number: WO 2025/143861

(57) **Abstract**

A protective cover for protecting a connector of a battery system assembly (BSA) installed beneath a vehicle is provided. According to the present invention, the protective cover for a connector of a battery system assembly includes a first cover portion configured to be mounted to the battery system assembly and a second cover portion connected to the first cover portion by one or more connecting portions, wherein the second cover portion is configured to be pivotable relative to the first cover portion at the connecting portion.

## Description

### TECHNICAL FIELD

The present invention relates to a cover for protecting a connector of a battery system assembly for a vehicle.

### BACKGROUND

Demand for external battery system assemblies (BSAs) for vehicles has been increasing. Since an external BSA is commonly mounted to an underside of a vehicle, debris from the ground may come into contact with or collide with the external BSA during operation of the vehicle. In particular, the connector portion of the BSA and wiring connected thereto are vulnerable to such contact with or impact from debris.

Korean Patent No. 10-1448252 discloses a battery including a battery terminal cover. However, since the battery terminal cover is designed for terminals of a stationary battery, it does not have a configuration capable of withstanding the harsh environment encountered by battery terminals of a vehicle during operation.

Although there has been a need for a protective cover for protecting a connector portion of a battery system assembly exposed beneath a vehicle from impacts from below, the prior art has failed to address this need.

### SUMMARY OF THE INVENTION

### PROBLEM TO BE SOLVED

An object of the present invention is to provide a cover having a structure capable of preventing damage to a connector of a BSA exposed beneath a vehicle while allowing debris accumulated on the cover to be readily discharged and preventing debris from entering beneath the cover.

Another object of the present invention is to provide a protective cover for a BSA that facilitates assembly operations.

The problems to be solved by the present invention are not limited to those described above, and other problems will be clearly understood by those skilled in the art from the following description.

### SOLUTION TO SOLVE PROBLEM

In order to achieve the above-described objects, a protective cover for a connector of a battery system assembly according to the present invention includes the following aspects and any combinations thereof.

One aspect of the present invention provides
a protective cover for a connector of a battery system assembly, comprising:
a first cover portion configured to be mounted to the battery system assembly; and
a second cover portion connected to the first cover portion by one or more connecting portions,
wherein the second cover portion is configured to be pivotable relative to the first cover portion at the connecting portion.

Another aspect of the present invention provides the protective cover wherein the first cover portion and the second cover portion respectively include bottom portions, and wherein the second cover portion is pivotable between a shielding position in which the bottom portion of the second cover portion is parallel to the bottom portion of the first cover portion and an access position in which the bottom portion of the second cover portion is disposed at a predetermined angle with respect to the bottom portion of the first cover portion.

Another aspect of the present invention provides the protective cover wherein the second cover portion includes one or more hooks configured to temporarily secure the second cover portion to the battery system assembly when the second cover portion is in the shielding position.

Another aspect of the present invention provides the protective cover wherein the second cover portion includes one or more debris discharge grooves in the bottom portion thereof.

Another aspect of the present invention provides the protective cover wherein the bottom portion of the second cover portion is configured to gradually slope downward toward one of the debris discharge grooves from at least one of opposite ends thereof in a longitudinal direction and from at least one of opposite ends thereof in a width direction.

Another aspect of the present invention provides the protective cover wherein a debris discharge opening is provided in the debris discharge groove, and wherein a rib protruding downward is provided along a periphery of the debris discharge opening.

Another aspect of the present invention provides the protective cover wherein the first cover portion and the second cover portion each include sidewall portions formed at opposite ends of the respective bottom portions in a longitudinal direction.

Another aspect of the present invention provides the protective cover wherein the first cover portion and the second cover portion are made of a plastic material.

Another aspect of the present invention provides the protective cover wherein the first cover portion and the second cover portion are made of unfilled polypropylene.

Another aspect of the present invention provides the protective cover wherein the first cover portion and the second cover portion are integrally formed.

### EFFECTS OF THE INVENTION

According to the present invention, damage to a connector of a BSA exposed beneath a vehicle can be minimized.

According to the present invention, assembly of the protective cover can be facilitated, and interference with other operations can be minimized even after assembly.

The effects of the present invention are not limited to those described above, and other effects will be clearly understood by those skilled in the art from the following description.

### BRIEF DESCRIPTION OF THE DRAWINGS

The following description will be better understood when read in conjunction with the accompanying drawings. Components having the same reference numerals in different drawings have similar functions and will not be repeatedly described unless necessary for understanding the invention, and known components may be briefly described or omitted but should not be construed as being excluded from the embodiments of the present invention.
FIG. 1 is a perspective view of a protective cover according to an embodiment of the present invention.
FIG. 2 is a right side view of the protective cover according to an embodiment of the present invention.
FIG. 3 is another perspective view of the protective cover shown in FIG. 1.
FIG. 4 is a cross-sectional view of the protective cover according to an embodiment of the present invention.
FIG. 5 shows the protective cover shown in FIG. 3 in an inverted state.

### DETAILED DESCRIPTION OF THE INVENTION

The present invention is not limited to the embodiments disclosed below but may be variously modified and implemented in different forms. The embodiments are provided merely to make the disclosure of the present invention complete and to fully convey the scope of the invention to those skilled in the art. Accordingly, the present invention is not limited to the embodiments disclosed below, and substitutions or additions between the configurations of one embodiment and another are possible. It should also be understood that all modifications, equivalents, and alternatives included within the spirit and scope of the present invention are encompassed.

The accompanying drawings are provided only to facilitate understanding of the embodiments disclosed in this specification, and the technical idea disclosed herein is not limited by the accompanying drawings. It should be understood that all modifications, equivalents, and alternatives included within the spirit and scope of the present invention are encompassed. In the drawings, components may be illustrated larger or smaller in size or thickness for convenience of understanding; however, the protection scope of the present invention should not be interpreted narrowly due to such illustration.

The terms used in this specification are merely for the purpose of describing particular embodiments and are not intended to limit the present invention. The singular expressions include plural expressions unless the context clearly dictates otherwise. The terms such as "comprising" and "consisting of" used in the specification are intended to specify that the features, numbers, steps, actions, components, parts, or combinations thereof described in the specification are present. That is, the terms such as "comprising" and "consisting of" should be understood not to preclude the presence or addition of one or more other features, numbers, steps, actions, components, parts, or combinations thereof.

Terms including ordinal numbers such as first and second may be used to describe various components but are not limited by such terms. The terms are used only to distinguish one component from another.

When a component is said to be "connected," or "coupled" to another component, it should be understood that it may be directly connected or coupled to the other component or indirectly connected or coupled through another component. In contrast, when a component is said to be "directly connected" or "directly coupled" to another component, it should be understood that there are no other components in between.

When a component is said to be "on" or "under" another component, it should be understood that it is not only arranged immediately on or under the other component but also that other components may be interposed in between.

Unless otherwise defined, all terms used herein, including technical or scientific terms, have the same meaning as commonly understood by those skilled in the art to which the present invention pertains. Terms defined in generally used dictionaries should be interpreted as having meanings consistent with the context of the related technology, and unless explicitly defined in this specification, they should not be interpreted in an idealized or excessively formal sense.

Hereinafter, the present invention will be described in detail with reference to the accompanying drawings.

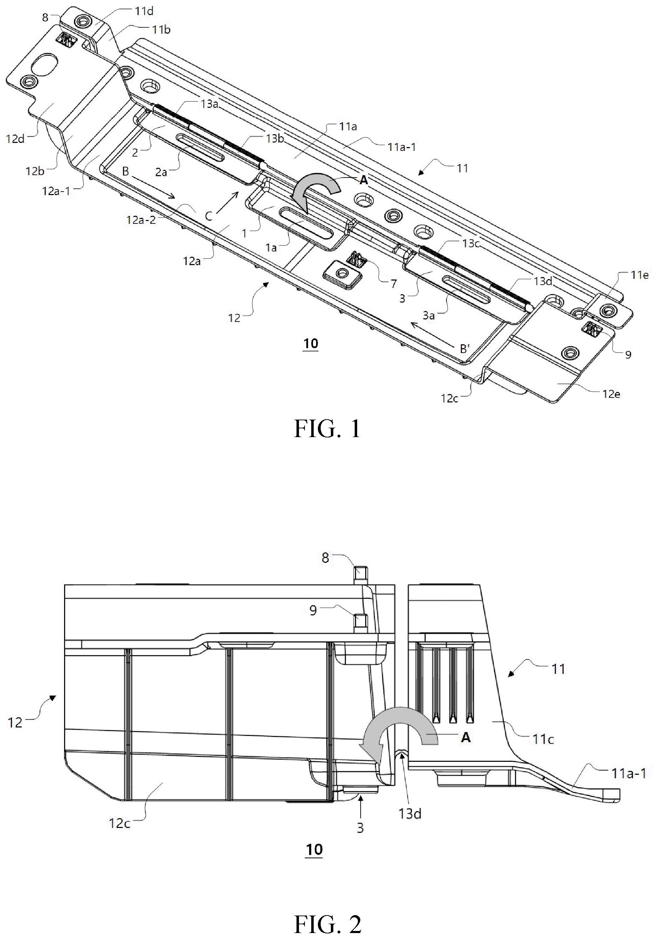

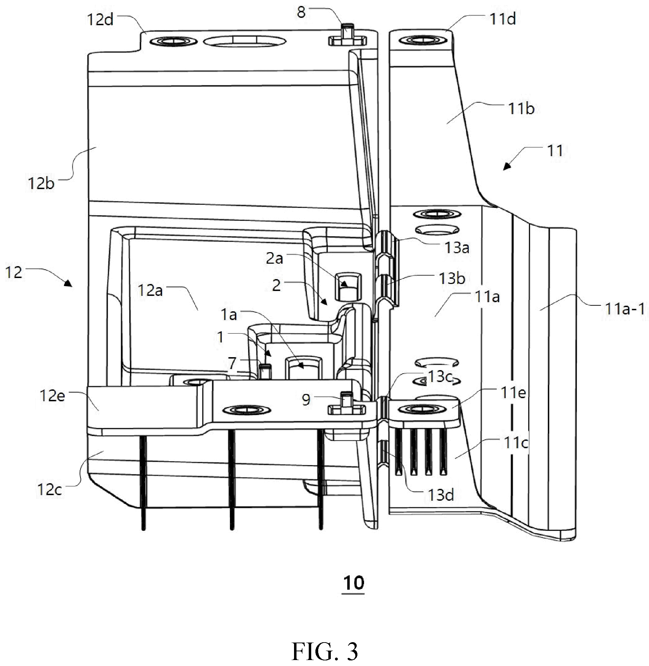

Referring to FIGS. 1 to 3, a protective cover 10 according to an embodiment of the present invention is shown. An external battery system assembly (BSA) (not shown) is generally installed in an exposed state beneath a vehicle, such as a hybrid electric vehicle (HEV) or an electric vehicle (EV). The protective cover 10 is configured to protect various connectors and wiring embedded in, for example, a side surface of the BSA, and includes a first cover portion 11 configured to be mounted to the BSA and a second cover portion 12 connected to the first cover portion 11. When mounted beneath the vehicle, the protective cover 10 is installed such that the upper surface shown in FIGS. 1 to 3 faces upward.

The first and second cover portions 11 and 12 are connected by connecting portions 13a, 13b, 13c, and 13d. Preferably, the protective cover 10 is integrally formed by injection molding a plastic material such as polypropylene (PP). More preferably, by using unfilled polypropylene, not only high flexibility of the connecting portions 13a, 13b, 13c, and 13d but also a lightweight structure of the protective cover 10 itself can be achieved. A metallic material may be undesirable because it may cause rattling, vibration, and noise during operation of the vehicle.

The second cover portion 12 is pivotable relative to the first cover portion 11 at the connecting portions 13a, 13b, 13c, and 13d. That is, the connecting portions 13a, 13b, 13c, and 13d may function as hinges. The number and configuration of the connecting portions may be variously implemented as long as the hinge function is ensured. With the first cover portion 11 fixed to the BSA, the second cover portion 12 can pivot in the direction indicated by arrow A (i.e., downward). This helps improve ease of assembly and access, as will be described below.

The first cover portion 11 may include a bottom portion 11a, sidewall portions 11b and 11c formed at opposite ends of the bottom portion 11a in a longitudinal direction, and a curved bottom portion 11a-1 curved downward from the bottom portion 11a. The curved bottom portion 11a-1 is provided to conform to an outer shape of the BSA, but may have a different shape or may be unnecessary depending on the configuration of the BSA. Mounting portions 11d and 11e for attachment to the BSA may be provided as extensions of the sidewall portions 11b and 11c. Fastening holes may be provided in the bottom portion 11a and the mounting portions 11d and 11e. Some of the plurality of holes formed in the bottom portion 11a may be used for debris discharge.

The second cover portion 12 may include a bottom portion 12a, sidewall portions 12b and 12c formed at opposite ends of the bottom portion 12a in the longitudinal direction, and mounting portions 12d and 12e extending from the sidewall portions 12b and 12c. As used herein, the "longitudinal direction" of the protective cover 10 or the cover portions 11 and 12 refers to a direction extending between the pair of sidewall portions 11b and 11c (or 12b and 12c) (see arrows B and B' in FIG. 1), and the "width direction" refers to a direction on the bottom portion 11a or 12a perpendicular to the longitudinal direction (see arrow C in FIG. 1).

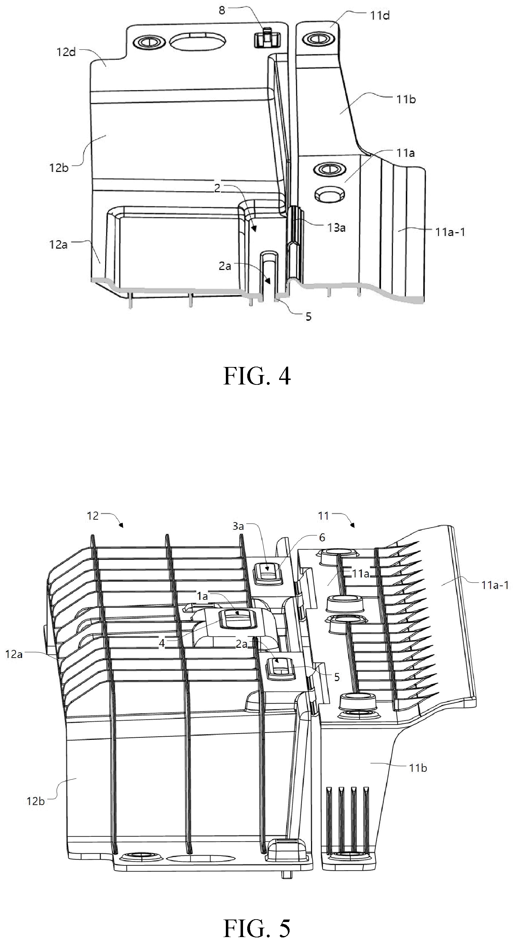

The bottom portion 12a of the second cover portion 12 is provided with debris discharge grooves 1, 2, and 3, so that small debris, such as sand and pebbles, can be discharged downward through respective debris discharge openings 1a, 1b, and 1c. The debris discharge grooves 1, 2, and 3 may each be formed as a recessed groove extending downward. Each of the debris discharge openings 1a, 1b, and 1c may be formed to occupy at least a portion of the corresponding debris discharge groove 1, 2, or 3, and preferably has a size that limits reverse entry of debris kicked up from the ground. By providing ribs 4, 5, and 6 protruding downward around the respective debris discharge grooves 1, 2, and 3 (see FIGS. 4 and 5), reverse entry of debris into the protective cover 10 can be more effectively prevented.

Referring again to FIG. 1, the bottom portion 12a of the second cover portion 12 may include an upper surface 12a-1 and a lower surface 12a-2 positioned one level below the upper surface 12a-1. The debris discharge grooves 1, 2, and 3 may be formed one level below the lower surface 12a-2.

In addition, the bottom portion 12a may have a slope to facilitate discharge of debris. That is, the bottom portion 12a may be configured to gradually slope downward from one or both opposite ends of the second cover portion 12 in the longitudinal direction toward at least one of the debris discharge grooves 1, 2, and 3 (see arrows B and B'), for example, at an inclination angle of about 1 to 5 degrees. Further, the bottom portion 12a may be configured to gradually slope downward from one or both opposite ends of the second cover portion 12 in the width direction toward at least one of the debris discharge grooves 1, 2, and 3, for example, at an inclination angle of about 1 to 5 degrees. In the illustrated embodiment, since the debris discharge grooves 1, 2, and 3 are formed adjacent to one end in the width direction, the bottom portion 12a is configured to gradually slope downward only in one direction from the opposite end in the width direction toward the debris discharge grooves 1, 2, and 3 (see arrow C).

The pivotability of the second cover portion 12 described above can significantly improve ease of assembly and access. Ease of assembly and access includes both ease of assembling the protective cover 10 and ease of performing connector and wiring operations on the BSA during or after assembly of the protective cover 10. In the former case, during a process of securing the first cover portion 11 to the BSA, assembly can be facilitated because the operation may be performed, if necessary, while the second cover portion 12 is pivoted downward. To further improve such ease of assembly and access, the protective cover 10 of the present invention may include hooks 7, 8, and 9 as one or more temporary securing means. The hooks 7, 8, and 9 may be temporarily secured by engaging corresponding structures (e.g., grooves configured to receive the hooks) provided in coupling means on the BSA, such as a fastening flange (not shown). This can facilitate assembly operations on a production line.

In the latter case, with the first cover portion 11 secured in place, the second cover portion 12 may be pivoted downward, thereby facilitating access to the connector of the BSA.

Although embodiments of the present invention have been described above with reference to the accompanying drawings, those skilled in the art will appreciate that the present invention may be embodied in other specific forms without departing from the spirit or essential characteristics thereof. Accordingly, the embodiments described above should be regarded as illustrative rather than restrictive. The scope of the present invention should be defined by the appended claims, and all changes and modifications falling within the meaning and equivalency of the claims are intended to be embraced therein.

## Claims

1. A protective cover for a connector of a battery system assembly, comprising:
a first cover portion configured to be mounted to the battery system assembly; and
a second cover portion connected to the first cover portion by one or more connecting portions,
wherein the second cover portion is configured to be pivotable relative to the first cover portion at the connecting portion.

2. The protective cover according to claim 1,
wherein the first cover portion and the second cover portion respectively include bottom portions, and
wherein the second cover portion is pivotable between a shielding position in which the bottom portion of the second cover portion is parallel to the bottom portion of the first cover portion and an access position in which the bottom portion of the second cover portion is disposed at a predetermined angle with respect to the bottom portion of the first cover portion.

3. The protective cover according to claim 2,
wherein the second cover portion includes one or more hooks configured to temporarily secure the second cover portion to the battery system assembly when the second cover portion is in the shielding position.

4. The protective cover according to claim 2,
wherein the second cover portion includes one or more debris discharge grooves in the bottom portion thereof.

5. The protective cover according to claim 4,
wherein the bottom portion of the second cover portion is configured to gradually slope downward toward one of the debris discharge grooves from at least one of opposite ends thereof in a longitudinal direction and from at least one of opposite ends thereof in a width direction.

6. The protective cover according to claim 4,
wherein a debris discharge opening is provided in the debris discharge groove, and
wherein a rib protruding downward is provided along a periphery of the debris discharge opening.

7. The protective cover according to claim 2,
wherein the first cover portion and the second cover portion each include sidewall portions formed at opposite ends of the respective bottom portions in a longitudinal direction.

8. The protective cover according to claim 1,
wherein the first cover portion and the second cover portion are made of a plastic material.

9. The protective cover according to claim 8,
wherein the first cover portion and the second cover portion are made of unfilled polypropylene.

10. The protective cover according to claim 1,
wherein the first cover portion and the second cover portion are integrally formed.
